# EUROPÄISCHE PATENTSCHRIFT

(11) **EP 2 668 058 B1**
(45) Veröffentlichungstag und Bekanntmachung des Hinweises auf die Patenterteilung: **22.10.2014**
(21) Anmeldenummer: 11796649.9
(22) Anmeldetag: 29.11.2011
(51) Int. Cl.: B60L 7/24, B60T 8/00, B60T 13/66, B60T 7/04, B60T 8/17, B60T 8/171, B60T 8/18, B60T 8/26, B60T 8/32, B60T 8/34, B60T 8/40, B60T 8/48, B60T 11/10, B60T 13/10, B60T 13/12

(54) **STEUERVORRICHTUNG FÜR EIN BREMSSYSTEM EINES FAHRZEUGS, BREMSSYSTEM UND VERFAHREN ZUM BETREIBEN EINES BREMSSYSTEMS FÜR EIN FAHRZEUG**
CONTROL DEVICE FOR A BRAKE SYSTEM OF A VEHICLE, BRAKE SYSTEM AND METHOD FOR OPERATING A BRAKE SYSTEM FOR A VEHICLE
DISPOSITIF DE COMMANDE POUR UN SYSTÈME DE FREINAGE DE VÉHICULE, SYSTÈME DE FREINAGE ET PROCÉDÉ POUR FAIRE FONCTIONNER UN SYSTÈME DE FREINAGE DE VÉHICULE

(30) Priorität: 26.01.2011 DE 102011003144
(43) Veröffentlichungstag der Anmeldung: 04.12.2013
(73) Patentinhaber: Robert Bosch GmbH, 70442 Stuttgart (DE)
(72) Erfinder: STRENGERT, Stefan, Stuttgart 70469 (DE); DROTLEFF, Dirk, Oberstenfeld 71720 (DE); KOTITSCHKE, Michael, Bad Friedrichshall 74177 (DE)
(86) Internationale Anmeldenummer: PCT/EP2011/071250
(87) Internationale Veröffentlichungsnummer: WO 2012/100864

(56) Entgegenhaltungen:
- EP-A2- 0 937 618
- WO-A1-01/72568
- WO-A1-97/39931
- WO-A1-03/053755
- DE-A1- 3 601 914
- DE-A1- 10 224 590
- DE-A1- 10 235 373
- DE-A1- 10 342 937
- DE-A1- 19 729 097
- DE-A1-102009 001 401
- GB-A- 2 173 269
- GB-A- 2 367 869

## Beschreibung

Die Erfindung betrifft eine Steuervorrichtung für ein Bremssystem eines Fahrzeugs und ein Bremssystem mit einer derartigen Steuervorrichtung. Des Weiteren betrifft die Erfindung ein Verfahren zum Betreiben eines Bremssystems für ein Fahrzeug.

### Stand der Technik

Aus dem Stand der Technik sind Bremssysteme für Kraftfahrzeuge mit zwei unabhängigen (getrennten) hydraulischen Bremskreisen bekannt. Aufgrund der unabhängigen Ausbildung der beiden Bremskreise soll es möglich sein, bei einem Kreisausfall aufgrund eines Bremskreisdefekts zumindest eine Mindestfunktion des Bremssystems noch zu gewährleisten und somit einen Totalausfall des Bremssystems zu verhindern.

In der DE 102 24 590 A1 ist beispielsweise ein Verfahren zum Ermitteln einer Störung eines Drucksensors oder eines Bremskreises einer hydraulischen Fahrzeugbremsanlage mit zwei Bremskreisen beschrieben. Die Störung oder der Ausfall soll mittels eines Vergleichs eines mittels des Drucksensors in einem Druckraum eines Hauptbremszylinders ermittelten hydraulischen Drucks (oder einer davon abgeleiteten Größe) mit einem Vakuumdruck mindestens eines an einem Vakuum-Bremskraftverstärker angeordneten Vakuumsensors (bzw. einer davon abgeleiteten Größe) erkennbar sein. Nach dem Erkennen der Störung oder des Ausfalls soll ein Trennventil, welches in einer hydraulische Leitung zwischen dem Hauptbremszylinder und dem noch funktionsfähigen Bremskreis angeordnet ist, geschlossen und anschließend mittels einer hydraulischen Pumpe mindestens eine Radbremse des noch funktionsfähigen Bremskreises mit Druck beaufschlagt werden. Auf diese Weise soll trotz der Störung oder des Ausfalls eine hydraulische Bremskraftverstärkung erzeugbar sein.

Die Offenlegungsschrift DE 197 29 097 A1 offenbart ein Verfahren und eine Vorrichtung zur Steuerung einer Bremsanlage, wobei der Bremsdruck in wenigstens einer Radbremse elektrisch abhängig von wenigstens dem Fahrerbremswunsch gesteuert wird. Die Bremsanlage umfasst einen Hochdruckspeicher, dessen Druck erfasst und bei der Steuerung der Bremsanlage berücksichtigt wird. Im Fehlerfall der Speicherdruckerfassung wird der Speicherdruck nach Maßgabe eines Modells abgeschätzt und der abgeschätzte Speicherdruck bei der Steuerung der Bremsanlage berücksichtigt.

### Offenbarung der Erfindung

Die Erfindung schafft eine Steuervorrichtung für ein Bremssystem eines Fahrzeugs mit den Merkmalen des Anspruchs 1, ein Bremssystem für ein Fahrzeug mit den Merkmalen des Anspruchs 5 und ein Verfahren zum Betreiben eines Bremssystems für ein Fahrzeug mit den Merkmalen des Anspruchs 9.

### Vorteile der Erfindung

Die Erfindung ermöglicht ein Fördern eines zusätzlichen Volumens in den zweiten Bremskreis zur zusätzlichen Bremskraftverstärkung, um insbesondere die gesetzlich geforderte Verzögerung auch bei einem Fehlerfall zu gewährleisten. Beispielsweise kann ein Defekt in dem ersten Bremskreis bei der Festlegung des Soll-Zusatzvolumens durch einen Vergleich der mindestens einen Soll-Größe mit der mindestens einen Ist-Größe erkannt und anschließend eine zusätzliche Bremskraftverstärkung in dem zweiten Bremskreis aktiviert werden. Auf diese Weise ist die Funktionsbeeinträchtigung des ersten Bremskreises, insbesondere ein Kreisausfall, kompensierbar.

Zusätzlich ist es mittels der vorliegenden Erfindung auch möglich, in dem zweiten Bremskreis vorliegende Luft mittels einer geeigneten Festlegung des Soll-Zusatzvolumens unter Berücksichtigung der Elastizitätsgröße zu kompensieren. Herkömmlicherweise wird die Volumenaufnahme einer standartgemäßen Bremsanlage durch das Vorliegen von Luft (in dem mindestens einen Bremskreis) deutlich erhöht. Dies kann zu einer Funktionsbeeinträchtigung des betroffenen Bremskreises führen. Mittels der vorliegenden Erfindung ist diese Funktionsbeeinträchtigung verhinderbar. Die vorliegende Erfindung ist deshalb vor allem bei By-Wire-Bremssystemen und Bremssystemen mit gealterter Bremsflüssigkeit vorteilhaft einsetzbar.

Bei einem Fahrzeug mit der erfindungsgemäßen Steuervorrichtung, dem damit ausgestatteten Bremssystem und mit einem Fahrzeugbetrieb unter Verwendung des entsprechenden Verfahrens ist die von dem Gesetzgeber für Kraftfahrzeuge geforderte Mindestfahrzeugverzögerung auf einfache Weise sowohl im fehlerfreien Normalbetrieb als auch im Fehlerfall, insbesondere bei einem Vorderachskreisausfall, gewährleistet. Beispielsweise kann das Kraftfahrzeug bei einem Kreisausfall mindestens eine Fahrzeugverzögerung von 2,44 m/s² ausführen. Somit kann der Fahrer auch nach einer Funktionsbeeinträchtigung das Fahrzeug auf komfortable Weise verlässlich abbremsen.

Unter dem Hauptbremszylinder-Einbrems-Modus ist ein Modus/Zustand des zweiten Bremskreises zu verstehen, in welchem der zweite Bremskreis derart mit dem Hauptbremszylinder verbunden ist, dass der Fahrer über einen Druckaufbau in dem Hauptbremszylinder noch in den mindestens einen zweiten Radbremszylinder hineinbremsen kann. Somit ist es bei der Ausführung der Erfindung nicht notwendig, vor dem Transferieren des Ist-Zusatzvolumens ein Trennventil zwischen dem Hauptbremszylinder und dem zweiten Bremskreis zu schließen. Stattdessen ist die vorliegende Erfindung auch bei einem Vorliegen eines derartigen Trennventils in einem zumindest teilgeöffneten Zustand, insbesondere in dem geöffneten Zustand, ausführbar. Damit hat der Fahrer bei der vorliegenden Erfindung weiterhin einen direkten Zugriff auf den zweiten Bremskreis. Der Fahrer kann deshalb auch nach oder während des Transferierens des Ist-Zusatzvolumens den in den mindestens einen zweiten Radbremszylinder vorliegenden Bremsdruck steuern/aktiv einstellen. Man kann dies auch so umschreiben, dass der Fahrer über den aufgebrachten Pedalweg/Pedaldruck und die angelegte Gegenkraft den Druck im zweiten (intakten) Bremskreis gegen den von der mindestens eine Volumenfördereinrichtung, wie beispielsweise einer Pumpe und/oder eines Plungers, vergrößerten Gegendruck regeln kann.

Es wird hier darauf hingewiesen, dass die vorliegende Erfindung ein Transferieren von einem zusätzlichen Bremsflüssigkeitvolumen in den mit dem Hauptbremszylinder hydraulisch verbundenen zweiten Bremskreis, in welchem über dem Hauptbremszylinder noch eingebremst werden kann, bietet, während bei dem herkömmlichen Verfahren ein Bremsdruck in einem intakten Bremskreis bei einem geschlossenen Trennventil durch Regelung aktiv eingestellt wird. Somit kann der Fahrer im Gegensatz zu der Regelung bei geschlossenem Trennventil bei der vorliegenden Erfindung den in dem mindestens einen zweiten Radbremszylinder aufgebauten Bremsdruck schnell ändern, ohne dass dazu eine aufwendige oder teure Elektronik notwendig wäre.

Außerdem benötigt die vorliegende Erfindung gegenüber dem herkömmlichen Verfahren keinen Unterdrucksensor. Somit ist die vorliegende Erfindung auch in einem Bremssystem ohne eine Unterdruckverstärkung vorteilhaft ausführbar. Da zur Anwendung der vorliegenden Erfindung kein Signal eines Unterdrucksensors benötigt wird, ist somit auch eine Ausführbarkeit unterhalb des Boosteraussteuerpunktes gewährleistet.

Während das herkömmliche Verfahren zu einem By-Wire-Bremskreis führt, in welchem ein Druckabbau nur durch Regeln über das stetig verstellbare Ventil möglich ist, ist es bei der vorliegenden Erfindung nicht notwendig, den Druck im zweiten (verbliebenen intakten) Bremskreis oberhalb des vom Fahrer erzeugten Druckniveaus aktiv anhand des geschätzten Bremswunsches zu regeln. Somit ist für die Ausführbarkeit der vorliegenden Erfindung auch eine kostengünstigere und weniger Bauraum benötigende Elektronik anwendbar.

### Kurze Beschreibung der Zeichnungen

Weitere Merkmale und Vorteile der vorliegenden Erfindung werden nachfolgend anhand der Figuren erläutert. Es zeigen:
- Fig. 1: ein Flussdiagramm zum Erläutern einer ersten Ausführungsform des Verfahrens zum Betreiben eines Bremssystems;
- Fig. 2: ein Koordinatensystem zum Darstellen einer zweiten Ausführungsform des Verfahrens zum Betreiben eines Bremssystems;
- Fig. 3: eine schematische Darstellung einer Ausführungsform der Steuervorrichtung; und
- Fig. 4: eine schematische Darstellung einer Ausführungsform des Bremssystems.

### Ausführungsformen der Erfindung

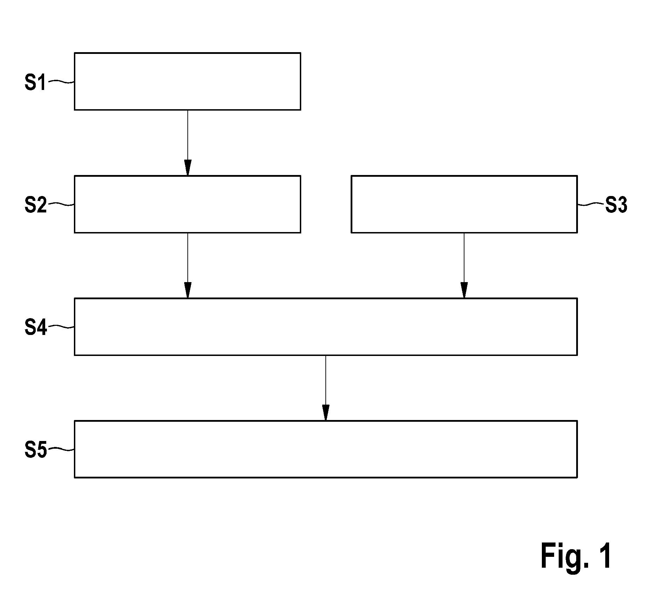

Fig. 1 zeigt ein Flussdiagramm zum Erläutern einer ersten Ausführungsform des Verfahrens zum Betreiben eines Bremssystems.

Das nachfolgend beschriebene Verfahren ist mit einem Bremssystem ausführbar, welches einen Hauptbremszylinder, ein mit einer Bremsflüssigkeit befüllbares bremskreis-externes Speichervolumen, einen ersten Bremskreis mit mindestens einem ersten Radbremszylinder, einen zweiten Bremskreis mit mindestens einem zweiten Radbremszylinder und mindestens eine Volumenfördereinrichtung umfasst. Die mindestens eine Volumenfördereinrichtung kann beispielsweise eine Pumpe und/oder ein Plunger sein.

Der mindestens eine zweite Bremskreis ist zumindest in einem Hauptbremszylinder-Einbrems-Modus betreibbar, in welchem ein Druck in dem zweiten Bremskreis mittels des Hauptbremszylinders steuerbar ist. Man kann darunter verstehen, dass der Fahrer die Möglichkeit hat, über eine Betätigung eines an dem Hauptbremszylinder angeordneten Bremsbetätigungselements, beispielsweise eines Bremspedals, über einen Druckaufbau in dem Hauptbremszylinder in den im Hauptbremszylinder-Einbrems-Modus vorliegenden zweiten Bremskreis einzubremsen. Unter einem derartigen Einbremsen kann ein Aufbauen eines Bremsdrucks in dem mindestens einen zweiten Radbremszylinder des zweiten Bremskreises verstanden werden. Auch der erste Bremskreis kann in einem derartigen Hauptbremszylinder-Einbrems-Modus betreibbar sein.

Der zweite Bremskreis kann zusätzlich zu dem Hauptbremszylinder-Einbrems-Modus auch in einem Fremdkraftbremsmodus betreibbar sein, in welchem eine in dem Hauptbremszylinder-Einbrems-Modus vorliegende hydraulische Verbindung zwischen dem Hauptbremszylinder und dem zweiten Bremskreis geschlossen/unterbunden ist und der in dem mindestens einen zweiten Radbremszylinder des zweiten Bremskreises vorliegende Bremsdruck unabhängig von einem Innendruck des Hauptbremszylinders ist. Die Anwendbarkeit des im Weiteren beschriebenen Verfahrens ist jedoch nicht auf eine Betreibbarkeit des zweiten Bremskreises in einem derartigen Fremdkraftbremsmodus limitiert. Ebenso kann der erste Bremskreis lediglich in einem Fremdkraftbremsmodus, in welchem ein in dem ersten Bremskreis vorliegender Bremsdruck unabhängig von einem Innendruck des Hauptbremszylinders ist, oder wahlweise in einem Hauptbremszylinder-Einbrems-Modus oder einem Fremdkraftbremsmodus betreibbar sein. Das im Weiteren beschriebene Verfahren ist somit mit vielen verschiedenen Typen von Bremssystemen ausführbar.

Das Verfahren kann einen Verfahrensschritt S1 umfassen, in welchem mindestens eine Soll-Größe bezüglich eines in dem ersten Bremskreis und/oder in dem mindestens einem ersten Radbremszylinder einzustellenden Soll-Bremsdrucks ermittelt wird. Als die mindestens eine erste Soll-Größe kann beispielsweise zumindest ein Bremsweg und/oder ein Bremsdruck einer Betätigung des Bremsbetätigungselements durch einen Fahrer des Fahrzeugs ermittelt werden. Darunter kann eine dem Bremsweg und/oder dem Bremsdruck entsprechende Größe, beispielsweise ein Verstellweg (Stangenweg) einer zwischen dem Hauptbremszylinder und dem Bremsbetätigungselement angeordneten Verbindungskomponente und/oder ein auf die Verbindungskomponente aufgebrachter Druck, verstanden werden. Auch eine Stangenweggeschwindigkeit ist als Ist-Größe ermittelbar. Die Soll-Größe bezüglich des in dem ersten Bremskreis und/oder in dem mindestens einem ersten Radbremszylinder einzustellenden Soll-Bremsdrucks kann auch ein in dem zweiten Bremskreis und/oder in dem mindestens einem zweiten Radbremszylinder vorliegender Druck sein, sofern in beiden Bremskreisen die gleichen Druckverhältnisse vorliegen sollen.

Zusammen mit dem Verfahrensschritt S1 kann das Verfahren auch einen Verfahrensschritt S2 umfassen, in welchem mindestens eine Ist-Größe bezüglich eines in dem ersten Bremskreis und/oder in dem mindestens einen ersten Radbremszylinder vorliegenden Ist-Bremsdrucks und/oder bezüglich eines von dem mindestens einen ersten Radbremszylinder auf mindestens ein Rad ausgeübtes Ist-Bremsmoment ermittelt wird. Beispielsweise kann ein in dem ersten Bremskreis und/oder in dem mindestens einen ersten Radbremszylinder vorliegender Druck, bzw. eine davon abgeleitete Größe, als die mindestens eine Ist-Größe bezüglich des vorliegenden Ist-Bremsdrucks ermittelt werden. Ebenso kann eine zeitliche Änderung einer Drehgeschwindigkeit eines dem zweiten Radbremszylinder zugeordneten Rads als die mindestens eine Ist-Größe bezüglich des von dem mindestens einen ersten Radbremszylinder auf mindestens ein Rad ausgeübten Ist-Bremsmoments ermittelt werden. Möglich ist es jedoch auch, anhand eines zeitlichen Verlaufs der Fahrzeuggeschwindigkeit eine aktuelle Fahrzeugverzögerung als die mindestens eine Ist-Größe zu ermitteln.

Für das Ausführen der Verfahrensschritte S1 und S2 besteht somit eine große Auswahl für die als Soll-Größe und als Ist-Größe ermittelbaren Sensorwerte. Dabei können zum Ausführen der Verfahrensschritte S1 und S2 bereits an einem Fahrzeug in der Regel vorhandene Sensoren eingesetzt werden. Das Ausführen des hier beschriebenen Verfahrens erfordert somit keine zusätzlich am Fahrzeug zu verbauenden Sensoren.

Die Bezeichnungen der Verfahrensschritte S1 und S2 legen keine zeitliche Reihenfolge zum Ausführen dieser Verfahrensschritte fest. Beispielsweise kann der Verfahrensschritt S2 auch vor dem Verfahrensschritt S1 oder gleichzeitig mit diesem ausgeführt werden.

Als Alternative oder als Ergänzung zu den Verfahrensschritten S1 und S2 kann das Verfahren auch den Verfahrensschritt S3 umfassen. In dem Verfahrensschritt S3 kann eine Elastizitätsgröße bezüglich einer Elastizität des zweiten Bremskreises ermittelt werden. Unter einer derartigen Elastizitätsgröße kann beispielsweise eine Größe bezüglich eines Verhältnisses zwischen mindestens einer Volumendifferenz des zweiten Bremskreises und/oder einer mit dem zweiten Bremskreis verbundenen Druckkammer des Hauptbremszylinders und einer Druckdifferenz in dem zweiten Bremskreis verstanden werden. Die Elastizitätsgröße kann auch die Volumendifferenz des zweiten Bremskreises und/oder einer mit dem zweiten Bremskreis verbundenen Druckkammer des Hauptbremszylinders bei unterschiedlichen Systemdrücken sein. Da Verfahren zum Bestimmen einer derartigen Elastizitätsgröße/Elastizität des zweiten Bremskreises aus dem Stand der Technik bekannt sind, wird hier nicht genauer darauf eingegangen.

In einem Verfahrensschritt S4 wird eine Vorgabegröße bezüglich eines Soll-Zusatzvolumens der Bremsflüssigkeit des in dem Hauptbremszylinder-Einbrems-Modus vorliegenden zweiten Bremskreises festgelegt. Die Vorgabegröße kann beispielsweise das Soll-Zusatzvolumen, eine Pumpfrequenz, eine Pumparbeit, eine Pumpleistung, eine Plungeransteuergröße und/oder eine Soll-Bestromung der mindestens einen Volumenfördereinrichtung des Bremssystems umfassen.

Das Festlegen der Vorgabegröße kann beispielsweise unter Berücksichtigung einer ersten Abweichungsgröße der mindestens einen Ist-Größe von der mindestens einen Soll-Größe erfolgen. Die erste Abweichungsgröße kann beispielsweise eine Differenz der mindestens einen Ist-Größe von der mindestens einen Soll-Größe sein. Weitere Möglichkeiten zum Ermitteln der ersten Abweichungsgröße sind ebenfalls möglich. Außerdem kann zusätzlich zu der ersten Abweichungsgröße auch eine Differenz zwischen der mindestens eine Ist-Größe und einer vorgegebenen Mindest-Größe bei der Festlegung der Vorgabegröße/des Soll-Zusatzvolumens berücksichtigt werden. Insbesondere kann ein Festlegen eines Soll-Zusatzvolumens erst erfolgen, wenn die Differenz ungleich Null ist.

Als Alternative oder als Ergänzung dazu kann das Festlegen der Vorgabegröße auch unter Berücksichtigung einer zweiten Abweichungsgröße der mindestens einen Elastizitätsgröße von einer vorgegebenen Soll-Elastizitätsgröße erfolgen. Die Soll-Elastizitätsgröße kann so vorgegeben sein, dass eine von der vorgegebenen Soll-Elastizitätsgröße abweichende Elastizitätsgröße bei einer erhöhten Bremskreiselastizität, d.h. bei einer Steigerung des in dem zweiten Bremskreis vorliegenden/benötigten Bremsflüssigkeitvolumens, insbesondere bei Luft in dem zweiten Bremskreis, auftritt. Mittels des Verfahrensschritts S4 ist somit eine Funktionsbeeinträchtigung des ersten Bremskreises, beispielsweise aufgrund von einem Austreten von Bremsflüssigkeit aus dem ersten Bremskreis, als auch eine Funktionsbeeinträchtigung des zweiten Bremskreises bei einer Steigerung des in dem zweiten Bremskreis vorliegenden Bremsflüssigkeitvolumens/Bremsflüssigkeitsbedarfs, insbesondere durch Luft in dem zweiten Bremskreis, indirekt feststellbar. Es wird jedoch darauf hingewiesen, dass die Funktionsbeeinträchtigung des ersten Bremskreises und/oder die erhöhte Elastizität des zweiten Bremskreises nicht (eigens) "erkannt" werden muss, sondern dass automatisch kompensiert werden kann. Dies ist ein weiterer Vorteil des Verfahrens. Durch eine geeignete Festlegung der Vorgabegröße/des Soll-Zusatzvolumens können die Funktionsbeeinträchtigung des ersten Bremskreises, wie ein Kreisausfall und/oder die in dem zweiten Bremskreis vorliegende Luft kompensiert werden, wie unten noch genauer beschrieben wird.

Optionalerweise kann in dem Verfahrensschritt S4 zusätzlich zu einem Soll-Zusatzvolumen ungleich Null auch ein Fehlerzustand des ersten Bremskreises und/oder eine Überelastizität des zweiten Bremskreises erkannt/festgelegt werden. Für eine derartige Kreisausfallerkennung sind keine weiteren Verfahrensschritte auszuführen. Der erkannte/festgelegte Fehlerzustand des ersten Bremskreises und/oder die Überelastizität des zweiten Bremskreises können anschließend dem Fahrer und/oder einer Fahrzeugwerkstatt mittels einer Informationsanzeige, einer Tonausgabe und/oder eines Funksignals mitgeteilt werden. Der Fahrer hat somit zusätzlich zu einem sicheren Abbremsen des Fahrzeugs die Möglichkeit, die Zustände seines Bremssystems zur Kenntnis zu nehmen und zeitig beheben zu lassen.

In einem weiteren Verfahrensschritt S5 wird ein der festgelegten Vorgabegröße/dem Soll-Zusatzvolumen entsprechendes Ist-Zusatzvolumen der Bremsflüssigkeit aus dem außerhalb des zweiten Bremskreises angeordneten Speichervolumen in den zweiten Bremskreis, welcher in dem Hauptbremszylinder-Einbrems-Modus vorliegt, mittels der mindestens einen Volumenfördereinrichtung eingebracht. In einer vorteilhaften Ausführungsform wird das Ist-Zusatzvolumen der Bremsflüssigkeit mittels der mindestens einen Volumenfördereinrichtung aus dem Speichervolumen über eine Reservoirleitung, welche den zweiten Bremskreis parallel zu dem Hauptbremszylinder mit dem Speichervolumen verbindet, in den im Hauptbremszylinder-Einbrems-Modus vorliegenden zweiten Bremskreis transferiert.

Als Alternative dazu kann auch eine Dichtungseinrichtung einer Austauschbohrung, welche das Speichervolumen mit dem Hauptbremszylinder verbindet, zumindest teilgeöffnet, bevorzugter Weise vollständig geöffnet, werden. Dies kann beispielsweise durch eine Überstromung der Dichtungseinrichtung auf einfache Weise ausgeführt werden. Anschließend kann das Ist-Zusatzvolumen der Bremsflüssigkeit mittels der mindestens einen Volumenfördereinrichtung aus dem Speichervolumen über die zumindest teilgeöffnete Dichtungseinrichtung (und mindestens einer Druckkammer des Hauptbremszylinders) in den im Hauptbremszylinder-Einbrems-Modus vorliegenden zweiten Bremskreis transferiert werden.

Es wird darauf hingewiesen, dass die Ausführbarkeit des Verfahrensschritts S5 kein Abtrennen des zweiten Bremskreises durch ein Schließen eines zwischen dem zweiten Bremskreis und dem Hauptbremszylinder angeordneten Trennventils erfordert. Somit hat der Fahrer auch während des Verfahrensschritts und/oder nach dem Verfahrensschritt S5 die Möglichkeit, direkt in den zweiten Bremskreis hineinzubremsen. Ebenso ist ein Druckabbau in dem zweiten Bremskreis auch nach dem Verfahrensschritt S5 ausführbar, indem die Bremsflüssigkeit auf einfache Weise aus dem zweiten Bremskreis in dem Hauptbremszylinder verschoben wird, indem der Fahrer das Bremspedal löst.

Das vorliegende Verfahren ermöglicht damit ein Kompensieren einer Funktionsbeeinträchtigung des ersten Bremskreises und/oder einer von einer Soll-Elastizitätsgröße abweichenden Bremskreiselastizität des zweiten Bremskreises. Gleichzeitig ist gewährleistet, dass der zweite Bremskreis weiterhin mit dem Hauptbremszylinder hydraulisch verbunden ist und somit über die hydraulische Verbindung zwischen dem zweiten Bremskreis und dem Hauptbremszylinder ein zusätzlicher Bremsdruckaufbau in dem zweiten Bremskreis mittels eines Druckaufbaus in dem Hauptbremszylinder schnell, verlässlich und auf einfache Weise vom Fahrer ausführbar ist. Dies ist ein wesentlicher Vorteil, welcher für den zweiten Bremskreis bei dem hier beschriebenen Verfahren gewährleistet ist, welcher jedoch bei einem By-Wire-Bremskreis nicht vorliegt.

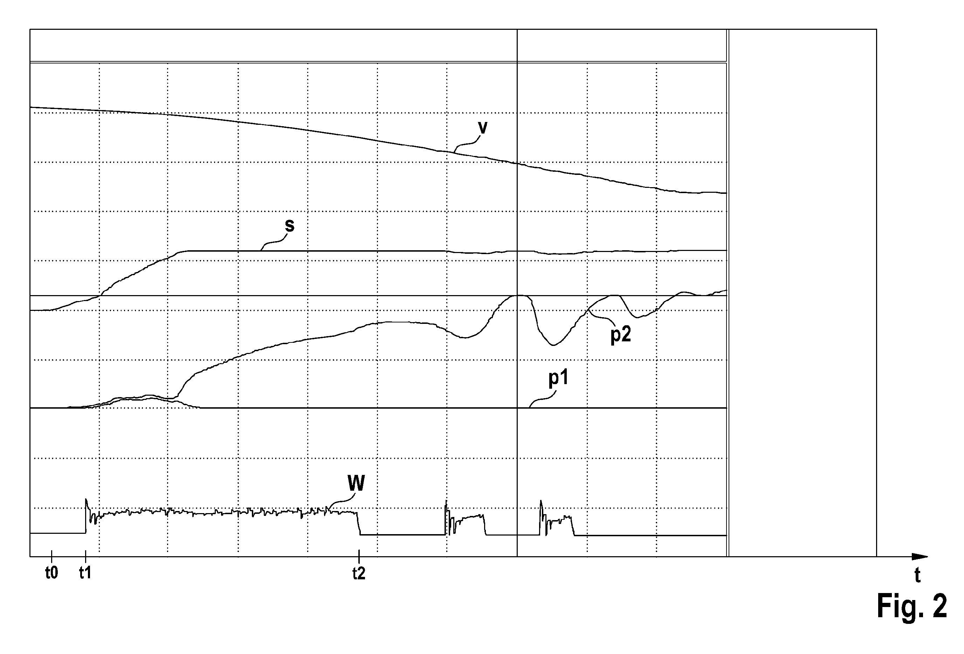

Fig. 2 zeigt ein Koordinatensystem zum Darstellen einer zweiten Ausführungsform des Verfahrens zum Betreiben eines Bremssystems.

Die Abszisse des Koordinatensystems entspricht einer Zeit t. Die Ordinate des Koordinatensystems gibt eine Fahrzeuggeschwindigkeit v (in m/s), einen Bremspedalweg s (in mm), einen ersten Bremsdruck p1 (in bar) in einem ersten Bremskreis an einer Vorderachse eines Fahrzeugs, einen zweiten Bremsdruck p2 (in bar) in einem zweiten Bremskreis an einer Hinterachse des Fahrzeugs und eine Förderarbeit W einer Volumenfördereinrichtung des Bremssystems, beispielsweise einer Pumpe, wieder.

Bei dem zum Ausführen des Verfahrens verwendeten Bremssystem liegt eine Funktionsbeeinträchtigung des ersten Bremskreises, mittels welchem im fehlerfreien Zustand des Bremssystems die Räder der Vorderachse abbremsbar sind, vor. Diese Funktionsbeeinträchtigung kann entweder vor dem Zeitpunkt t0 oder zwischen den Zeiten t0 und t1 mittels der oben schon beschriebenen Verfahrensschritte, beispielsweise durch Ermitteln von Ist-Größe und Soll-Größe und miteinander vergleichen der ermittelten Werte, erkannt werden. Da die Verfahrensschritte zum Ermitteln der Ist-Größe und der Soll-Größe, zum Erkennen der Funktionsbeeinträchtigung des ersten Bremskreises und zum Festlegen eines entsprechenden Soll-Zusatzvolumens des zweiten Bremskreises, welcher in dem oben schon genannten Hauptbremszylinder-Einbrems-Modus vorliegt, schon beschrieben sind, wird hier nicht noch einmal darauf eingegangen. Es wird nur darauf hingewiesen, dass die Verfahrensschritte so schnell ausführbar sind, dass die im Weiteren beschriebene Antwort des Bremssystems auf das festgelegte Soll-Zusatzvolumen des zweiten Bremskreises nicht/kaum davon beeinträchtigt wird, ob die Verfahrensschritte bereits vor dem Zeitpunkt t0 oder zwischen den Zeiten t0 und t1 ausgeführt werden.

Ab dem Zeitpunkt t0 betätigt der Fahrer das Bremspedal. Somit liegt ab dem Zeitpunkt t0 ein Bremspedalweg s ungleich Null vor.

Ab dem Zeitpunkt t1 erfolgt eine Ansteuerung der Volumenfördereinrichtung derart, dass mittels der Volumenfördereinrichtung ein dem (indirekt) festgelegten Soll-Zusatzvolumen entsprechendes Ist-Zusatzvolumen in den zweiten Bremskreis eingebracht wird. Dazu ist es nicht notwendig, das Soll-Zusatzvolumen direkt festzulegen. Stattdessen kann eine einfachere Methode ausgeführt werden, indem als Vorgabegröße ein Aktivierungssignal der mindestens einen Volumenfördereinrichtung und/oder ein einzustellender Soll-Druck in dem zweiten Bremskreis festgelegt wird. Die Förderarbeit W weist somit ab der Zeit t1 Werte ungleich 0 auf. Entsprechend nimmt der zweite Bremsdruck p2 des zweiten Bremskreises ab der Zeit t1 deutlich zu. Somit ist das Fahrzeug, wie anhand der abnehmenden Fahrzeuggeschwindigkeit v erkennbar ist, trotz des geringen ersten Bremsdrucks p1 verlässlich abbremsbar.

Eine Deaktivierung der mindestens einen Volumenfördereinrichtung kann erst erfolgen, wenn der als Vorgabegröße festgelegte Soll-Druck in dem zweiten Bremskreis ermittelt wird. Damit kann der zweite Bremsdruck p2 des zweiten Bremskreises auch mittels der Betätigung der Volumenfördereinrichtung bei einem konstant bleibenden Bremspedalweg s gesteigert werden, beispielsweise wenn das zu verschiebende Volumen aus dem Hauptbremszylinder erschöpft ist (Anschlag).

Ab der Zeit t2 ist eine gewünschte Fahrzeugverzögerung erreicht.

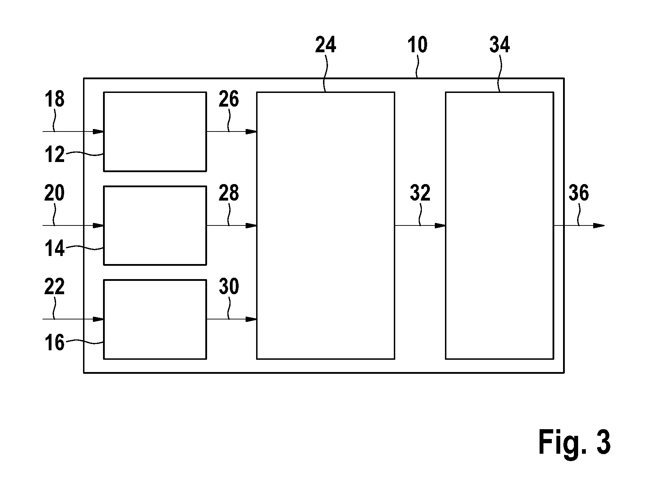

Fig. 3 zeigt eine schematische Darstellung einer Ausführungsform der Steuervorrichtung.

Die schematisch dargestellte Steuervorrichtung 10 ist für ein (nicht skizziertes) Bremssystem eines Fahrzeugs verwendbar. Die Steuervorrichtung 10 umfasst eine erste Empfangseinrichtung 12 und eine zweite Empfangseinrichtung 14 und/oder eine dritte Empfangseinrichtung 16. Bei der dargestellten Ausführungsform weist die Steuervorrichtung 10 drei Empfangseinrichtungen 12 bis 16 auf. Die Steuervorrichtung 10 ist jedoch nicht auf die Ausstattung mit allen drei Empfangseinrichtungen 12 bis 16 limitiert. Bei der Ausbildung der Steuervorrichtung 10 besteht somit eine große Freiheit bezüglich der Ausstattung mit mindestens einer Empfangseinrichtung 12 bis 16.

Mittels der ersten Empfangseinrichtung 12 ist mindestens eine bereitgestellte Soll-Größe bezüglich eines in einem ersten Bremskreis des Bremssystems und/oder in mindestens einen ersten Radbremszylinder des ersten Bremskreises einzustellenden Soll-Bremsdrucks empfangbar. Als die mindestens eine Soll-Größe kann beispielsweise mindestens ein Sensorsignal 18 eines Bremswegsensors und/oder eines Bremsdrucksensors empfangbar sein. Das mindestens eine Sensorsignal 18 kann einen Bremsweg/Verstellweg, eine zeitliche Ableitung des Bremswegs/Verstellwegs, einen Bremsdruck und/oder eine zeitliche Ableitung des Bremsdrucks umfassen.

Die zweite Empfangseinrichtung 14 ist derart ausgebildet, dass mittels der zweiten Empfangseinrichtung 14 mindestens eine bereitgestellte Ist-Größe bezüglich eines in dem ersten Bremskreis und/oder in dem mindestens ersten Radbremszylinder vorliegenden Ist-Bremsdrucks und/oder bezüglich eines von dem mindestens einen ersten Radbremszylinder auf mindestens ein Rad ausgeübten Ist-Bremsmoments empfangbar sind. Insbesondere kann als die mindestens eine Ist-Größe mindestens ein Ausgabesignal 20 eines Bremsdrucksensors, eines Raddrehgeschwindigkeitssensors und/oder eines Fahrzeuggeschwindigkeitssensors empfangbar sein. Somit kann das Ausgabesignal 20 einen Bremsdruck, eine zeitliche Ableitung des Bremsdrucks, einen Raddrehgeschwindigkeit, eine zeitliche Ableitung der Raddrehgeschwindigkeit, eine Fahrzeuggeschwindigkeit und/oder eine zeitliche Ableitung der Fahrzeuggeschwindigkeit umfassen.

Mit der dritten Empfangseinrichtung 16 ist eine Elastizitätsgröße bezüglich einer Elastizität eines zweiten Bremskreises des Bremssystems empfangbar. Unter der Elastizitätsgröße kann eine über ein Elastizitätssignal 22 empfangene Größe bezüglich eines Verhältnisses mindestens einer Volumendifferenz des zweiten Bremskreises und/oder einer mit dem zweiten Bremskreis verbundenen Hauptbremszylinder-Kammer und einer Druckdifferenz in dem zweiten Bremskreis verstanden werden. (Mittels der dritten Empfangseinrichtung 16 oder einer weiteren Empfangseinrichtung kann in einer Weiterbildung auch der im zweiten Bremskreis vorliegende Druck empfangbar sein.)

Die Steuervorrichtung 10 umfasst eine Auswerteeinrichtung 24, mittels welcher eine Vorgabegröße bezüglich eines Soll-Zusatzvolumens einer Bremsflüssigkeit des in einem Hauptbremszylinder-Einbrems-Modus vorliegenden zweiten Bremskreises festlegbar ist. Die Vorgabegröße kann beispielsweise das Soll-Zusatzvolumen, eine Pumpfrequenz, eine Pumparbeit, eine Pumpleistung, eine Plungeransteuergröße und/oder eine Soll-Bestromung mindestens einer Volumenfördereinrichtung des Bremssystems, wie beispielsweise einer Pumpe und/oder eines Plungers, sein. Unter dem Hauptbremszylinder-Einbrems-Modus kann ein Modus des zweiten Bremskreises verstanden werden, in welchem ein Druck in dem zweiten Bremskreis mittels eines Hauptbremszylinders des Bremssystems, beispielsweise über eine Drucksteigerung oder eine Druckreduzierung in der mit dem zweiten Bremskreis hydraulisch verbundenen Hauptbremszylinder-Kammer, vom Fahrer steuerbar ist.

Das Festlegen der Vorgabegröße/des Soll-Zusatzvolumens ist mittels der Auswerteeinrichtung 24 unter Berücksichtigung einer ersten Abweichungsgröße der mindestens einen Ist-Größe von der mindestens einen Soll-Größe und/oder unter Berücksichtigung einer zweiten Abweichungsgröße der Elastizitätsgröße von einer vorgegebenen Soll-Elastizitätsgröße ausführbar. Dazu empfängt die Auswerteeinrichtung 24 beispielsweise ein Soll-Größe-Signal 26 und ein Ist-Größe-Signal 28 und legt anschließend die erste Abweichungsgröße, insbesondere als Differenz, fest. Ebenso kann die Auswerteeinrichtung 24 nach einem Empfangen eines Elastizitätsgröße-Signals 30 die zweite Abweichungsgröße als Differenz der Elastizitätsgröße von der vorgegebenen Soll-Elastizitätsgröße festlegen.

Die Auswerteeinrichtung 24 gibt anschließend ein der festgelegten Vorgabegröße/dem Soll-Zusatzvolumen entsprechendes Vorgabesignal 32 an eine Steuereinrichtung 34 aus. Mittels der Steuereinrichtung 34 ist ein dem festgelegten Soll-Zusatzvolumen entsprechendes Steuersignal 36 an mindestens eine Volumenfördereinrichtung des Bremssystems so ausgebbar, dass mittels der mindestens einen Volumenfördereinrichtung ein dem Soll-Zusatzvolumen entsprechendes Ist-Zusatzvolumen der Bremsflüssigkeit aus einem bremskreis-externen Speichervolumen des Bremssystems in den im Hauptbremszylinder-Einbrems-Modus vorliegenden zweiten Bremskreis einbringbar ist. Dies gewährleistet die oben schon beschriebenen Vorteile.

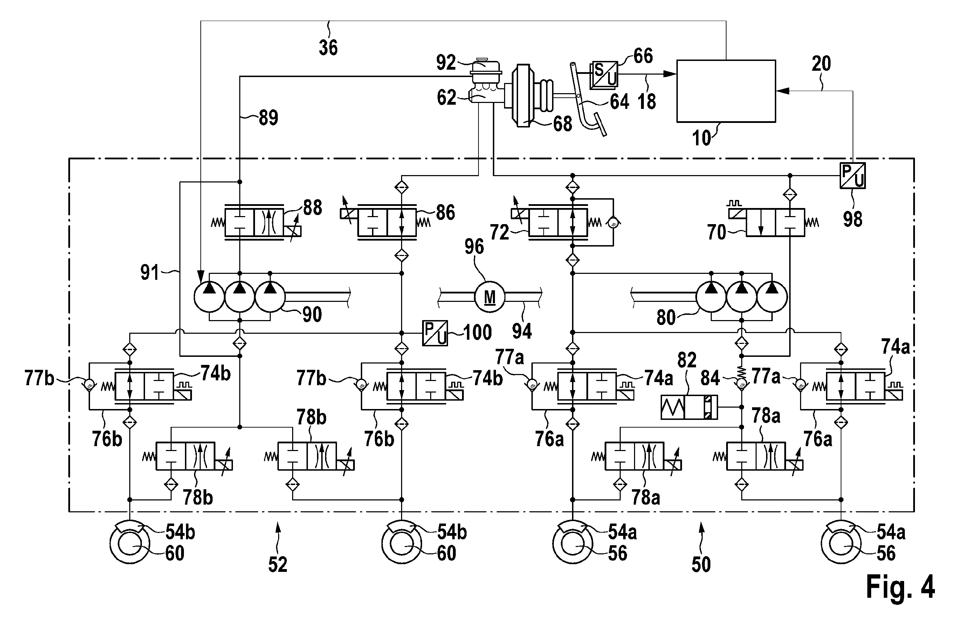

Fig. 4 zeigt eine schematische Darstellung einer Ausführungsform des Bremssystems.

Das in Fig. 4 schematisch wiedergegebene Bremssystem mit der oben schon beschriebenen Steuervorrichtung 10 weist einen ersten Bremskreis 50 und einen zweiten Bremskreis 52 mit jeweils zwei Radbremszylindern 54a und 54b auf. Den beiden Radbremszylindern 54a des ersten Bremskreises 50 sind zwei an der Vorderachse angeordneten Rädern 56 zugeordnet. An der Vorderachse kann auch ein (nicht skizzierter) Generator angeordnet sein. Den beiden Radbremszylindern 54b des zweiten Bremskreises 52 sind die Räder 60 an der Hinterachse zugeordnet. Das hier beschriebene Bremssystem ist jedoch nicht auf eine achsweise Bremskreisaufteilung beschränkt. Stattdessen ist das Bremssystem auch einsetzbar, wenn die einem gemeinsamen Bremskreis 50 oder 52 zugeordneten Räder 56 und 60 auf einer Seite des Fahrzeugs oder diagonal am Fahrzeug angeordnet sind.

Es wird ausdrücklich drauf hingewiesen, dass die im Weiteren beschriebenen Komponenten des Bremssystems lediglich ein Beispiel für eine mögliche Ausbildung des vorteilhaften Bremssystems mit der Steuervorrichtung 10 darstellen. Ein Vorteil des Bremssystems liegt vor allem darin, dass die Bremskreise 50 und 52 nicht auf eine bestimmte Ausbildung oder auf das Einsetzen bestimmter Komponenten festgelegt sind. Stattdessen können die Bremskreise 50 und 52 mit einer hohen Wahlfreiheit modifiziert werden, ohne dass die Vorteile der Ausstattung des Bremssystems mit der Steuervorrichtung 10 beeinträchtigt werden.

Das Bremssystem weist ein an einem Hauptbremszylinder 62 angeordnetes Bremseingabeelement 64, beispielsweise ein Bremspedal, auf. Zur Bereitstellung der Soll-Größe kann ein Bremswegsensor 66 an dem Bremseingabeelement 64 angeordnet sein. Als Alternative zu dem Bremswegsensor 66 kann auch ein Bremskraftsensor/Bremsdrucksensor eingesetzt werden. Optionaler Weise kann das Bremssystem auch einen Bremskraftverstärker 68, beispielsweise einen hydraulischen Bremskraftverstärker oder einen elektromechanischen Bremskraftverstärker, umfassen.

Der erste Bremskreis 50 ist mit einem Hauptschaltventil 70 und einem Umschaltventil 72 so ausgebildet, dass der Fahrer über den Hauptbremszylinder 62 direkt in die Radbremszylinder 54a des ersten Bremskreises 50 hineinbremsen kann. Jedem der beiden Radbremszylinder 54a des ersten Bremskreises 50 sind ein Radeinlassventil 74a mit einer parallel dazu verlaufenden Bypassleitung 76a, ein in jeder Bypassleitung 76a angeordnetes Rückschlagventil 77a und ein Radauslassventil 78a zugeordnet. Außerdem umfasst der erste Bremskreis 50 eine erste Pumpe 80, deren Ansaugseite mit den Radauslassventilen 78a verbunden ist und deren Förderseite zu dem Umschaltventil 72 gerichtet ist, eine zwischen den Radauslassventilen 78a und der Pumpe 80 angekoppelte Speicherkammer 82 und ein zwischen der ersten Pumpe 80 und der Speicherkammer 82 angeordnetes Überdruckventil 84.

Der zweite Bremskreis 52 ist als ein von dem Hauptbremszylinder 62 entkoppelbarer Bremskreis ausgebildet. Dazu weist der zweite Bremskreis 52 ein Trennventil 86 auf, mittels welchem die Radbremszylinder 54b des zweiten Bremskreises 52, die den Radbremszylindern 54b zugeordneten Radeinlassventile 74b mit parallel angeordneten Bypassleitungen 76b mit Rückschlagventilen 77b und die den Radbremszylinder 54b zugeordneten Radauslassventile 78b von dem Hauptbremszylinder 62 abkoppelbar sind. Über ein Schließen des Trennventils 86 kann verhindert werden, dass das Betätigen des Bremseingabeelements 64 eine Steigerung des Bremsdrucks in den Radbremszylindern 54b des zweiten Bremskreises 52 bewirkt. Dies ist insbesondere vorteilhaft, wenn zum Aufladen der (nicht dargestellten) Fahrzeugbatterie der Generator während eines Abbremsvorgangs eingesetzt werden soll. Da der Generator ein zusätzliches Generator-Bremsmoment auf das Fahrzeug ausübt, kann durch Entkoppeln der Radbremszylinder 54b des zweiten Bremskreises 52 verhindert werden, dass die Gesamt-Verzögerung des Fahrzeugs größer als eine von dem Fahrer vorgegebene Soll-Fahrzeugverzögerung ist. Außerdem weist der zweite Bremskreis 52 ein stetig regelbares/verstellbares/steuerbares Ventil 88 und eine zweite Pumpe 90 auf. Das stetig regelbare Ventil 88 ist über eine Reservoirleitung 89 mit einem Bremsmediumreservoir 92 an dem Hauptbremszylinder 62 hydraulisch verbunden. Das Bremsmediumreservoir 92 stellt lediglich ein Beispiel für ein in dem Bremssystem einsetzbares Speichervolumen, welches mit einer Bremsflüssigkeit des Bremssystems befüllbar ist, dar. Als Alternative zu dem Bremsmediumreservoir 92 kann auch ein anders ausgebildetes Speichervolumen zum Einsetzen der Steuervorrichtung 10 verwendet werden, welches vorzugsweise extern angeordnet und/oder keine Komponente des zweiten Bremskreises 52 ist.

Die Ansaugseite der zweiten Pumpe 90 ist ebenfalls mit dem Bremsmediumreservoir 92 über eine parallel zu dem stetig regelbaren Ventil 88 und der zweiten Pumpe 90 verlaufende Leitung 91 und die Reservoirleitung 89 hydraulisch so verbunden, dass nach einem Schließen des Trennventils 86 ein Bremsmediumvolumen mittels der zweiten Pumpe 90 über die (zumindest teilgeöffneten) Radeinlassventile 74b in die Radbremszylinder 54b des zweiten Bremskreises 52 ablassbar ist. Die Förderseite der zweiten Pumpe 90 ist über das stetig regelbare Ventil 88 so mit dem Bremsmediumreservoir 92 verbunden, dass nach dem Schließen des Trennventils 86 ein Bremsmediumvolumen aus den Radbremszylindern 54b des zweiten Bremskreises 52 über die (zumindest teilgeöffneten) Radauslassventile 78b und das (zumindest teilgeöffnete) stetig regelbare Ventil 88 in das Bremsmediumreservoir 92 pumpbar ist. Somit kann nach dem Schließen des Trennventils 86 das hydraulische Bremsmoment der Radbremszylinder 54b des zweiten Bremskreises 52 mittels der zweiten Pumpe 90 und dem stetig regelbaren Ventil 88 aktiv eingestellt werden. Insbesondere kann das hydraulische Bremsmoment der von dem Hauptbremszylinder 62 entkoppelten Radbremszylinder 54b des zweiten Bremskreises 52 entsprechend einer Differenz zwischen einem von dem Fahrer vorgegebenen Soll-Gesamtbremsmoment und einem Ist-Gesamtbremsmoment aus dem Generator-Bremsmoment des Generators und dem hydraulischen Bremsmoment der Radbremszylinder 54a des ersten Bremskreises 50 eingestellt werden.

Die Pumpen 80 und 90 können jeweils als Drei-Kolben-Pumpen auf einer gemeinsamen Welle 94 eines Motors 96 angeordnet sein. Anstelle von Drei-Kolben-Pumpen sind beispielsweise auch andere Pumpentypen für die Pumpen 80 und 90 verwendbar. Die Pumpe 90 ist lediglich ein Beispiel für eine verwendbare Volumenfördereinrichtung. Anstelle oder als Ergänzung zu der Pumpe 90 kann das Bremssystem auch ein anderes Volumenfördereinrichtung, wie beispielsweise einen Plunger, umfassen.

Die in den oberen Absätzen beschriebenen Komponenten 70 bis 96 des Bremssystems stellen lediglich Beispiele für eine Ausstattung eines mit der nachfolgend genauer beschriebenen Steuervorrichtung 10 ausgestatteten Bremssystems dar.

Der zweite Bremskreis 52 ist in einem Hauptbremszylinder-Einbrems-Modus betreibbar, in welchem ein Druck in dem zweiten Bremskreis 52 mittels des Hauptbremszylinders 62 steuerbar ist. Der Hauptbremszylinder-Einbrems-Modus des zweiten Bremskreises 52 liegt vor, wenn das Trennventil 86 zumindest in einen teilgeöffneten Zustand gesteuert ist. Insbesondere liegt der zweite Bremskreis 52 in dem Hauptbremszylinder-Einbrems-Modus vor, wenn das Trennventil 86 offen ist.

Über ein Schließen des Trennventils 86 ist der zweite Bremskreis 52 zusätzlich in einen Fremdkraftbremsmodus steuerbar, in welchem ein in dem zweiten Bremskreis 52 vorliegender Bremsdruck aktiv mittels der zweiten Pumpe 90 und dem stetig verstellbaren Ventil 88 einstellbar ist. Der Fremdkraftbremsmodus des zweiten Bremskreises 52 kann beispielsweise dazu genutzt werden, um ein auf die Achse der Räder 56 des ersten Bremskreises ausgeübtes rekuperatives Bremsmoment des Generators zu verblenden. Dazu kann der Bremsdruck in dem zweiten Bremskreis 52 mittels der zweiten Pumpe 90 und dem stetig verstellbaren Ventil 88 aktiv so eingestellt werden, dass er einer Differenz zwischen einem bevorzugten Gesamt-Bremsmoment und der auf die Räder 56 des ersten Bremskreises 50 ausgeübten Summe der hydraulischen Bremsmomente und der rekuperativen Bremsmomente entspricht. Das hier beschriebene Bremssystem ist somit auch insbesondere in einem Elektro- oder in einem Hybridfahrzeug vorteilhaft einsetzbar.

Jeder der beiden Bremskreise 50 und 52 weist mindestens einen Drucksensor 98 bis 100 auf, welcher zum Ermitteln eines Kreisdrucks und/oder eines Raddrucks ausgebildet ist. Somit ist eine Information/Größe bezüglich eines in dem zugehörigen Bremskreis 50 oder 52, bzw. in den zugehörigen Radbremszylindern 56 und 60 vorliegenden Ist-Bremsdrucks ermittelbar/messbar. Die von dem Drucksensor 98 des ersten Bremskreises 50 ermittelte Information/Größe bezüglich des in dem ersten Bremskreis 50, bzw. in den Radbremszylindern 54a, vorliegenden Ist-Bremsdrucks ist als Ausgabesignal 20/Ist-Größe an die Steuervorrichtung 10 bereitstellbar.

Mittels der Steuervorrichtung 10 ist die von dem Sensor 98 bereitgestellte Ist-Größe empfangbar. Als Alternative oder als Ergänzung zu der Ist-Größe des Sensors 98 können mittels der Steuervorrichtung 10 auch andere Ist-Größen bezüglich eines von mindestens einem Radbremszylinder 54a auf mindestens ein Rad 56 ausgeübten Ist-Bremsmoments empfangbar sein. Die Steuervorrichtung 10 ist zusätzlich dazu ausgelegt, eine von dem Sensor 66 über ein Sensorsignal 18 bereitgestellte Soll-Größe zu empfangen. (Optionalerweise ist die Steuervorrichtung 10 zusätzlich dazu ausgelegt, eine Elastizitätsgröße bezüglich einer Elastizität des zweiten Bremskreises 52 zu empfangen, was im Weiteren jedoch nicht beschrieben ist.)

Die Steuervorrichtung 10 ist dazu ausgelegt, die oben schon beschriebene Vorgabegröße bezüglich eines Soll-Zusatzvolumens der Bremsflüssigkeit des in dem Hauptbremszylinder-Einbrems-Modus vorliegenden zweiten Bremskreises 52 unter Berücksichtigung der mindestens einen Soll-Größe und der mindestens einen Ist-Größe festzulegen. (Optionalerweise kann bei der Festlegung der Vorgabegröße/des Soll-Zusatzvolumens auch die mindestens eine Elastizitätsgröße berücksichtigt werden.) Des Weiteren ist die Steuervorrichtung 10 dazu ausgelegt, die Pumpe 90 mittels des Steuersignals 36 derart anzusteuern, dass ein dem festgelegten Soll-Zusatzvolumen entsprechendes Ist-Zusatzvolumen der Bremsflüssigkeit aus dem Bremsmediumreservoir 92 in den zweiten Bremskreis 52 pumpbar ist. (Anstelle oder als Ergänzung zu der Pumpe 90 kann dazu auch ein Plunger verwendet werden.) Man kann dies als Befüllen des zweiten Bremskreises 62 aus dem Bremsmediumreservoir 92 umschreiben. Dieses ist ausführbar, während der zweite Bremskreis 52 aufgrund des Vorliegens des Trennventils 86 zumindest in einem teilgeöffneten Zustand in dem Hauptbremszylinder-Einbrems-Modus vorliegt. Auf diese Weise sind mittels der Steuervorrichtung 10 die oben schon genannten Vorteile realisierbar. Die Ausführbarkeit ist nicht auf das dargestellte Modulationssystem beschränkt, sondern lässt sich auch auf Modulationssysteme übertragen, die es ermöglichen, externes Volumen in zumindest den zweiten Bremskreis 52 zu fördern.

Bei der dargestellten Ausführungsform ist der zweite Bremskreis 52 über die parallel zu dem Hauptbremszylinder 62 verlaufende Reservoirleitung 89 mit dem Bremsmediumreservoir 92 verbunden. In diesem Fall kann das Ist-Zusatzvolumen mittels der Pumpe 90 aus dem Bremsmediumreservoir 92 über die Reservoirleitung 89 in den zweiten Bremskreis 52 gepumpt werden, während dieser in dem Hauptbremszylinder-Einbrems-Modus vorliegt. (Die Verschiebung des Ist-Zusatzvolumens kann zusätzlich zu dem vom Fahrer aus dem Hauptbremszylinder 62 in den zweiten Bremskreis 52 verschobenen Volumen erfolgen.)

Das hier beschriebene Bremssystem ist jedoch nicht auf eine Ausstattung mit einer derartigen Reservoirleitung beschränkt. Stattdessen kann das Ist-Zusatzvolumen auch über eine Austauschbohrung mit einer Dichtungseinrichtung, welche das hier mit dem Bremsmediumreservoir 92 beispielhaft wiedergegebene Speichervolumen mit dem Hauptbremszylinder 62 verbindet, gepumpt werden. Eine derartige Austauschbohrung kann beispielsweise eine Schnüffelbohrung mit Zentralventil sein. Somit kann das Befüllen des zweiten Bremskreises 52 mit dem Ist-Zusatzvolumen der Bremsflüssigkeit auch über die in einen zumindest teilgeöffneten Zustand gesteuerte Dichtungseinrichtung erfolgen, während der zweite Bremskreis 52 in dem Hauptbremszylinder-Einbrems-Modus vorliegt.

In einer bevorzugten Ausführungsform umfasst der Hauptbremszylinder 62 eine dem ersten Bremskreis 50 zugeordnete erste Druckkammer 102 und eine dem zweiten Bremskreis 52 zugeordnete zweite Druckkammer 104. Darunter kann verstanden werden, dass die Zuführungsleitung des ersten Bremskreises 50 zu der ersten Druckkammer 102 führt, während die Zuführungsleitung des zweiten Bremskreises 52 in der zweiten Druckkammer 104 mündet. Vorteilhafterweise ist ein erstes Maximalvolumen der ersten Druckkammer 102, welches vorliegt, sofern das Bremsbetätigungselement 64 nicht betätigt wird, größer als ein zweites Maximalvolumen der zweiten Druckkammer 104, welches bei Nichtbetätigung des Bremsbetätigungselements 64 eingenommen wird.

Das Einsetzen der Steuervorrichtung 10 eröffnet somit die Möglichkeit, das Kammervolumen des zweiten Bremskreises 52 deutlich geringer zu dimensionieren. Sofern der zweite Bremskreis 52 in einem By-Wire-System ausgebildet wird, kann das Kammervolumen insbesondere komplett entfallen. Diese Verkleinerung des zweiten Maximalvolumens der zweiten Druckkammer 104 gegenüber dem ersten Maximalvolumen der ersten Druckkammer 102 ist bei gleichzeitiger Erfüllung der gesetzlichen Anforderung ausführbar. Der in dem Bremssystem einsetzbare Hauptbremszylinder 62 kann somit in seiner Länge verkürzt werden. Auf diese Weise ist der Bauraumbedarf des Hauptbremszylinders 62 reduzierbar. Die kürzere Gestaltung des Hauptbremszylinders 62 (in seiner Längsrichtung) bietet auch Vorteile beim Packaging.

Die Steuervorrichtung 10 gewährleistet eine Kompensation einer Funktionsbeeinträchtigung des ersten Bremskreises 50. Somit muss das Bremssystem nicht mit komplexen oder fehleranfälligen Sensoren zum Feststellen einer Leakage in dem ersten Bremskreis 50 ausgestattet werden.(Optional kann mittels der Steuervorrichtung 10 auch eine Überelastizität des zweiten Bremskreises 52, beispielsweise aufgrund von eingeschlossener Luft, kompensiert werden, weshalb auf Sensoren zum Feststellen von Luft in dem zweiten Bremskreis 52 verzichtet werden kann.) Auf diese Weise ist die Robustheit des Bremssystems steigerbar.

Bei der Festlegung des Soll-Zusatzvolumens des zweiten Bremskreises 52 und bei der Ausgabe des Steuersignals 36 können auch vorgegebene Abschaltschwellen, welche insbesondere Höchstwerte vorgeben, und/oder Regelschwellen, welche bevorzugte Wertebereiche für die Pumpgeschwindigkeiten festlegen, berücksichtigt werden. Bevorzugter Weise kann die Aktivierung der Pumpe 90 in einem geräuschoptimierten Betriebsbereich erfolgen bei gleichzeitiger Deaktivierung/Abschaltung der Pumpe 90 im Fahrzeugstillstand.

In einer bevorzugten Ausführungsform wird die Pumpe 90 angesteuert, wenn anhand der Überschreitung eines Schwellwerts des Pedalwegs ein Fahrerbremswunsch erkannt wird und der in dem ersten Bremskreis 50 vorliegende Bremsdruck kleiner als ein Schwellwert ist, welcher der gesetzlich geforderten Verzögerung oder einer höheren Schwelle entspricht. Auf diese Weise ist eine gute Unterstützung des Fahrers im unteren Verzögerungsbereich bei gleichzeitig bestmöglicher Dosierbarkeit der Fahrzeugverzögerung im mittleren bis höheren Verzögerungsbereich gewährleistet.

Eine Ansteuerung der Pumpe kann ebenso erfolgen, sofern beispielsweise der Pedalwegsensor eine Bremsbetätigung erkennen lässt, jedoch kein Druckaufbau am Drucksensor 98 des ersten Bremskreises 50 gemessen wird. (Ebenso kann das Ist-Zusatzvolumen in den zweiten Bremskreis 52 gepumpt werden, sofern die Elastizität des zweiten Bremskreises 52 über einem vorgegebenen Schwellwert liegt und auf Luft im zweiten Bremskreis 52 oder sonstige die Volumenaufnahme der Bremsen 54b erhöhende Effekte geschlossen werden kann.)

Das hier beschriebene Bremssystem gewährleistet selbst bei der vorliegenden achsweisen Bremskreisaufteilung und einer evtl. vorliegenden vorderachslastigen Verteilung des Fahrzeugsgewichts ein sicheres Abbremsen des Fahrzeugs auch bei einem Auftreten einer Funktionsbeeinträchtigung, wie insbesondere einem Ausfall, des ersten Bremskreises 50 und/oder bei einer von einem Normalwertebereich abweichenden Elastizität des zweiten Bremskreises 52.

## Patentansprüche

1. Steuervorrichtung (10) für ein Bremssystem eines Fahrzeug mit:
einer ersten Empfangseinrichtung (12) und einer zweiten Empfangseinrichtung (14), wobei mittels der ersten Empfangseinrichtung (12) mindestens eine bereitgestellte Soll-Größe (s) bezüglich eines in einem ersten Bremskreis (50) des Bremssystems und/oder in mindestens einem ersten Radbremszylinder (54a) des ersten Bremskreises (50) einzustellenden Soll-Bremsdrucks und mittels der zweiten Empfangseinrichtung (14) mindestens eine bereitgestellte Ist-Größe (p1) bezüglich eines in dem ersten Bremskreis (50) und/oder in dem mindestens einen ersten Radbremszylinder (54a) vorliegenden Ist-Bremsdrucks (p1) und/oder bezüglich eines von dem mindestens einen ersten Radbremszylinder (54a) auf mindestens ein Rad (56) ausgeübten Ist-Bremsmoments empfangbar sind; und/oder
einer dritten Empfangseinrichtung (16), mittels welcher eine Elastizitätsgröße bezüglich einer Elastizität eines zweiten Bremskreises (52) des Bremssystems empfangbar ist; und
einer Auswerteeinrichtung (24), mittels welcher eine Vorgabegröße bezüglich eines Soll-Zusatzvolumens einer Bremsflüssigkeit des in einem Hauptbremszylinder-Einbrems-Modus vorliegenden zweiten Bremskreises (52), wobei ein Druck (p2) in dem im Hauptbremszylinder-Einbrems-Modus vorliegenden zweiten Bremskreis (52) mittels eines Hauptbremszylinders (62) des Bremssystems steuerbar ist, unter Berücksichtigung einer ersten Abweichungsgröße der mindestens einen Ist-Größe (p1) von der mindestens einen Soll-Größe (s) und/oder einer zweiten Abweichungsgröße der Elastizitätsgröße von einer vorgegebenen Soll-Elastizitätsgröße festlegbar ist; und
einer Steuereinrichtung (34), mittels welcher ein der festgelegten Vorgabegröße entsprechendes Steuersignal (36) an mindestens eine Volumenfördereinrichtung (90) des Bremssystems so ausgebbar ist, dass mittels der mindestens einen Volumenfördereinrichtung (90) ein dem Soll-Zusatzvolumen entsprechendes Ist-Zusatzvolumen der Bremsflüssigkeit aus einem Speichervolumen (92) des Bremssystems in den in dem Hauptbremszylinder-Einbrems-Modus vorliegenden zweiten Bremskreis (52) einbringbar ist.

2. Steuervorrichtung (10) nach Anspruch 1, wobei als die mindestens eine Soll-Größe (s) mindestens ein Sensorsignal (18) eines Bremswegsensors (66) und/oder eines Bremsdrucksensors empfangbar und berücksichtigbar sind.

3. Steuervorrichtung (10) nach Anspruch 1 oder 2, wobei als die mindestens eine Ist-Größe (p1) mindestens ein Ausgabesignal (20) eines Bremsdrucksensors (98), eines Raddrehgeschwindigkeitssensors und/oder eines Fahrzeuggeschwindigkeitssensors empfangbar und berücksichtigbar sind.

4. Steuervorrichtung (10) nach einem der vorhergehenden Ansprüche, wobei als die Elastizitätsgröße bezüglich der Elastizität des zweiten Bremskreises (52) eine Größe bezüglich eines Verhältnisses mindestens einer Volumendifferenz des zweiten Bremskreises (52) und/oder einer mit dem zweiten Bremskreis (52) verbundenen Hauptbremszylinder-Kammer (104) und einer Druckdifferenz in dem zweiten Bremskreis (52) empfangbar und berücksichtigbar ist.

5. Bremssystem für ein Fahrzeug mit:
einem Hauptbremszylinder (62);
einem mit einer Bremsflüssigkeit befüllbaren Speichervolumen (92);
einem ersten Bremskreis (50) mit mindestens einem ersten Radbremszylinder (54a) und einem zweiten Bremskreis (52) mit mindestens einem zweiten Radbremszylinder (52b), wobei der zweite Bremskreis (52) zumindest in einem Hauptbremszylinder-Einbrems-Modus betreibbar ist, in welchem ein Druck (p2) in dem zweiten Bremskreis (52) mittels des Hauptbremszylinders (62) steuerbar ist;
mindesten einer Volumenfördereinrichtung (90); und
eine Steuervorrichtung (10) nach einem der vorhergehenden Ansprüche.

6. Bremssystem nach Anspruch 5, wobei der zweite Bremskreis (52) über eine parallel zu dem Hauptbremszylinder (62) verlaufende Reservoirleitung (89) mit dem Speichervolumen (92) verbunden ist und das Ist-Zusatzvolumen der Bremsflüssigkeit mittels der mindestens einen Volumenfördereinrichtung (90) aus dem Speichervolumen (92) über die Reservoirleitung (89) in den in dem Hauptbremszylinder-Einbrems-Modus vorliegenden zweiten Bremskreis (52) einbringbar ist.

7. Bremssystem nach Anspruch 5, wobei das Speichervolumen (92) über eine Austauschbohrung mit einer Dichtungseinrichtung mit dem Hauptbremszylinder (62) verbunden ist, und wobei das Ist-Zusatzvolumen der Bremsflüssigkeit mittels der mindestens einen Volumenfördereinrichtung (90) aus dem Speichervolumen (92) über die in einen zumindest teilgeöffneten Zustand gesteuerte Dichtungseinrichtung in den in dem Hauptbremszylinder-Einbrems-Modus vorliegenden zweiten Bremskreis (52) einbringbar ist.

8. Bremssystem nach einem der Ansprüche 5 bis 7, wobei der Hauptbremszylinder (62) eine dem ersten Bremskreis (50) zugeordnete erste Druckkammer (102) und eine dem zweiten Bremskreis (52) zugeordnete zweite Druckkammer (104) umfasst, und wobei ein erstes Maximalvolumen der ersten Druckkammer (102) größer als ein zweites Maximalvolumen der zweiten Druckkammer (104) ist.

9. Verfahren zum Betreiben eines Bremssystems für ein Fahrzeug, mit einem Hauptbremszylinder (62), einem mit einer Bremsflüssigkeit befüllbaren Speichervolumen (92), einem ersten Bremskreis (50) mit mindestens einem ersten Radbremszylinder (54a), einem zweiten Bremskreis (52) mit mindestens einem zweiten Radbremszylinder (54b), wobei der zweite Bremskreis (52) zumindest in einem Hauptbremszylinder-Einbrems-Modus betreibbar ist, in welchem ein Druck (p2) in dem zweiten Bremskreis (52) mittels des Hauptbremszylinders (62) steuerbar ist, und mindestens einer Volumenfördereinrichtung (90), mit den Schritten:
Ermitteln mindestens einer Soll-Größe (s) bezüglich eines in dem ersten Bremskreis (50) und/oder in dem mindestens einen ersten Radbremszylinder (54a) einzustellenden SollBremsdrucks und Ermitteln mindestens einer Ist-Größe (p1) bezüglich eines in dem ersten Bremskreis (50) und/oder in dem mindestens einen ersten Radbremszylinder (54a) vorliegenden Ist-Bremsdrucks (p1) und/oder bezüglich eines von dem mindestens einen ersten Radbremszylinder (54a) auf mindestens ein Rad (56) ausgeübten Ist-Bremsmoments; und/oder
Ermitteln einer Elastizitätsgröße bezüglich einer Elastizität des zweiten Bremskreises (52); Festlegen einer Vorgabegröße bezüglich eines Soll-Zusatzvolumens der Bremsflüssigkeit des in dem Hauptbremszylinder-Einbrems-Modus vorliegenden zweiten Bremskreises (52) unter Berücksichtigung einer ersten Abweichungsgröße der mindestens einen Ist-Größe (p1) von der mindestens einen Soll-Größe (s) und/oder einer zweiten Abweichungsgröße der Elastizitätsgröße von einer vorgegebenen Soll-Elastizitätsgröße; und
Einbringen eines der Vorgabegröße entsprechenden Ist-Zusatzvolumens der Bremsflüssigkeit aus dem Speichervolumen (92) in den in dem Hauptbremszylinder-Einbrems-Modus vorliegenden zweiten Bremskreis (52) mittels der mindestens einen Volumenfördereinrichtung (90).

10. Verfahren nach Anspruch 9, wobei das Ist-Zusatzvolumen der Bremsflüssigkeit mittels der mindestens einen Volumenfördereinrichtung (90) aus dem Speichervolumen (92) über eine Reservoirleitung (89), welche den zweiten Bremskreis (52) parallel zu dem Hauptbremszylinder (62) mit dem Speichervolumen (92) verbindet, in den in dem Hauptbremszylinder-Einbrems-Modus vorliegenden zweiten Bremskreis (52) eingebracht wird.

11. Verfahren nach Anspruch 9, wobei eine Dichtungseinrichtung einer Austauschbohrung, welche das Speichervolumen (92) mit dem Hauptbremszylinder (62) verbindet, zumindest teilgeöffnet wird und das Ist-Zusatzvolumen der Bremsflüssigkeit mittels der mindestens einen Volumenfördereinrichtung (90) aus dem Speichervolumen (92) über die zumindest teilgeöffnete Dichtungseinrichtung in den in dem Hauptbremszylinder-Einbrems-Modus vorliegenden zweiten Bremskreis (52) eingebracht wird.

12. Verfahren nach einem der Ansprüche 9 bis 11, wobei zumindest ein Bremsweg (s) und/oder ein Bremsdruck einer Betätigung eines Bremsbetätigungselements (64) durch einen Fahrer des Fahrzeugs als die mindestens eine Soll-Größe (s) ermittelt werden.

13. Verfahren nach einem der Ansprüche 9 bis 12, wobei zumindest ein Druck (p1) in dem ersten Bremskreis (50) und/oder in dem mindestens einen ersten Radbremszylinder (54a), eine zeitliche Änderung einer Drehgeschwindigkeit eines Rads (56) und/oder eine Fahrzeugverzögerung als die mindestens eine Ist-Größe (p1) ermittelt werden.

14. Verfahren nach einem der Ansprüche 9 bis 13, wobei eine Größe bezüglich eines Verhältnisses mindestens einer Volumendifferenz des zweiten Bremskreises (52) und/oder einer mit dem zweiten Bremskreis (52) verbundenen Druckkammer (104) des Hauptbremszylinders (62) und einer Druckdifferenz in dem zweiten Bremskreis als die Elastizitätsgröße bezüglich der Elastizität des zweiten Bremskreises (52) ermittelt wird.

## Claims

1. Control device (10) for a brake system of a vehicle, having:
a first receiver device (12) and a second receiver device (14), wherein at least one supplied setpoint variable (s) relating to a setpoint brake pressure which is to be set in a first brake circuit (50) of the brake system and/or in at least a first wheel brake cylinder (54a) of the first brake circuit (50) can be received by means of the first receiver device (12), and at least one supplied actual variable (p1) relating to an actual brake pressure (p1) which is present in the first brake circuit (50) and/or in the at least one first wheel brake cylinder (54a) and/or relating to an actual braking torque which is applied to at least one wheel (56) by the at least one first wheel brake cylinder (54a) can be received by means of the second receiver device (14); and/or
a third receiver device (16) by means of which an elasticity variable relating to an elasticity of a second brake circuit (52) of the brake system can be received; and
an evaluation device (24) by means of which a predefined variable can be defined relating to a setpoint additional volume of a brake fluid of the second brake circuit (52) which is present in a master brake cylinder braking mode, wherein a pressure (p2) can be controlled in the second brake circuit (52), present in the master brake cylinder braking mode, by means of a master brake cylinder (62) of the brake system, taking into account a first difference variable of the at least one actual variable (p1) from the at least one setpoint variable (s) and/or a second difference variable of the elasticity variable from a predefined setpoint elasticity variable; and
a control apparatus (34) by means of which a control signal (36) which corresponds to the defined predefined variable can be output to at least one volume feed device (90) of the brake system in such a way that, by means of the at least one volume feed device (90), an actual additional volume, corresponding to the setpoint additional volume, of the brake fluid can be input from a storage volume (92) of the brake system into the second brake circuit (52) which is present in the master brake cylinder braking mode.

2. Control device (10) according to Claim 1, wherein at least one sensor signal (18) of a braking distance sensor (66) and/or of a brake pressure sensor can be received as the at least one setpoint variable (s) and taken into account.

3. Control device (10) according to Claim 1 or 2, wherein at least one output signal (20) of a brake pressure sensor (98), of a wheel speed sensor and/or of a vehicle speed sensor can be received as the at least one actual variable (p1) and taken into account.

4. Control device (10) according to one of the preceding claims, wherein a variable relating to a ratio between at least one difference in volume between the second brake circuit (52) and/or a master brake cylinder chamber (104) connected to the second brake circuit (52) and a difference in pressure in the second brake circuit (52) can be received as the elasticity variable relating to the plasticity of the second brake circuit (52) and taken into account.

5. Brake system for a vehicle, having:
a master brake cylinder (62);
a storage volume (92) which can be filled with a brake fluid;
a first brake circuit (50) with at least a first wheel brake cylinder (54a) and a second brake circuit (52) with at least a second wheel brake cylinder (52b), wherein the second brake circuit (52) can be operated at least in a master brake cylinder braking mode in which a pressure (p2) in the second brake circuit (52) can be controlled by means of the master brake cylinder (62);
at least one volume feed device (90); and
a control device (10) according to one of the preceding claims.

6. Brake system according to Claim 5, wherein the second brake circuit (52) is connected to the storage volume (92) via a reservoir line (89) running parallel to the master brake cylinder (62), and the actual additional volume of the brake fluid can be input from the storage volume (92) via the reservoir line (89) into the second brake circuit (52) which is present in the master brake cylinder braking mode, by means of the at least one volume feed device (90).

7. Brake system according to Claim 5, wherein the storage volume (92) is connected to the master brake cylinder (62) via an exchange bore with a sealing device, and wherein the actual additional volume of the brake fluid can be input from the storage volume (92) via the sealing device, placed in an at least partially opened state, into the second brake circuit (52) which is present in the master brake cylinder braking mode, by means of the at least one volume feed device (90).

8. Brake system according to one of Claims 5 to 7, wherein the master brake cylinder (62) comprises a first pressure chamber (102) which is assigned to the first brake circuit (50), and a second pressure chamber (104) which is assigned to the second brake circuit (52), and wherein a first maximum volume of the first pressure chamber (102) is greater than a second maximum volume of the second pressure chamber (104).

9. Method for operating a brake system for a vehicle, having a master brake cylinder (62), a storage volume (92) which can be filled with a brake fluid, a first brake circuit (50) with at least a first wheel brake cylinder (54a), a second brake circuit (52) with at least a second wheel brake cylinder (54b), wherein the second brake circuit (52) can be operated at least in a master brake cylinder braking mode in which a pressure (p2) in the second brake circuit (52) can be controlled by means of the master brake cylinder (62), and at least one volume feed device (90), having the steps:
determining at least one setpoint variable (s) relating to a setpoint brake pressure which is to be set in the first brake circuit (50) and/or in the at least one first wheel brake cylinder (54a), and determining at least one actual variable (p1) relating to an actual brake pressure (p1) which is present in the first brake circuit (50) and/or in the at least one first wheel brake cylinder (54a) and/or relating to an actual braking torque which is applied to at least one wheel (56) by the at least one first wheel brake cylinder (54a); and/or
determining an elasticity variable relating to an elasticity of the second brake circuit (52);
defining a predefined variable relating to a setpoint additional volume of the brake fluid of the second brake circuit (52), present in the master brake cylinder braking mode, taking into account a first difference variable of the at least one actual variable (p1) from the at least one setpoint variable (s) and/or a second difference variable of the elasticity variable from a predefined setpoint elasticity variable;
and
inputting an actual additional volume, corresponding to the predefined variable, of the brake fluid from the storage volume (92) into the second brake circuit (52), present in the master brake cylinder braking mode, by means of the at least one volume feed device (90).

10. Method according to Claim 9, wherein the actual additional volume of the brake fluid is input from the storage volume (92) via a reservoir line (89), which connects the second brake circuit (52) to the storage volume (92) in parallel with the master brake cylinder (62), into the second brake circuit (52) which is present in the master brake cylinder braking mode, by means of the at least one volume feed device (90).

11. Method according to Claim 9, wherein a sealing device of an exchange bore, which connects the storage volume (92) to the master brake cylinder (62) is at least partially opened and the actual additional volume of the brake fluid is input from the storage volume (92) via the at least partially opened sealing device into the second brake circuit (52), which is present in the master brake cylinder braking mode, by means of the at least one volume feed device (90).

12. Method according to one of Claims 9 to 11, wherein at least one braking distance (s) and/or one brake pressure of an activation of a brake activation element (64) are/is determined as the at least one setpoint variable (s) by a driver of the vehicle.

13. Method according to one of Claims 9 to 12, wherein at least one pressure (p1) in the first brake circuit (50) and/or in the at least one first wheel brake cylinder (54a), a change in a rotational speed of a wheel (56) over time and/or a vehicle deceleration are/is determined as the at least one actual variable (p1).

14. Method according to one of Claims 9 to 13, wherein a variable relating to a ratio between at least one difference in volume between the second brake circuit (52) and/or a pressure chamber (104), connected to the second brake circuit (52), of the master brake cylinder (62) and a difference in pressure in the second brake circuit is determined as the elasticity variable relating to the elasticity of the second brake circuit (52) .

## Revendications

1. Dispositif de commande (10) pour un système de freinage d'un véhicule avec :
un premier dispositif récepteur (12) et un deuxième dispositif récepteur (14), au moins une grandeur théorique (s) mise à disposition pouvant être reçue, à l'aide du premier dispositif récepteur (12), par rapport à une pression de freinage théorique à régler dans un premier circuit de freinage (50) du système de freinage et/ou à régler dans au moins un premier cylindre de freinage de roue (54a) du premier circuit de freinage (50) et au moins une grandeur réelle (p1) mise à disposition pouvant être reçue, à l'aide du deuxième dispositif récepteur (14), par rapport à une pression de freinage réelle (p1) régnant dans le premier circuit de freinage (50) et/ou régnant dans au moins un premier cylindre de freinage de roue (54a) et/ou pouvant être reçue par rapport à un couple de freinage réel exercé sur au moins une roue (56) par l'au moins un premier cylindre de freinage de roue (54a) ; et/ou
un troisième dispositif récepteur (16) à l'aide duquel une grandeur d'élasticité peut être reçue par rapport à une élasticité d'un deuxième circuit de freinage (52) du système de freinage ; et
un dispositif d'analyse (24) à l'aide duquel une grandeur prescrite peut être constatée par rapport à un volume supplémentaire théorique d'un liquide de frein du deuxième circuit de freinage (52) présent dans un mode de freinage de maître-cylindre, une pression (p2) régnant dans le deuxième circuit de freinage (52) présent dans le mode de freinage de maître-cylindre pouvant être commandée à l'aide d'un maître-cylindre de frein (62) du système de freinage, en tenant compte d'une première grandeur d'écart de l'au moins une grandeur réelle (p1) par rapport à l'au moins une grandeur théorique (s) et/ou d'une deuxième grandeur d'écart de la grandeur d'élasticité par rapport à une grandeur d'élasticité théorique prédéfinie ; et
un dispositif de commande (34) à l'aide duquel un signal de commande (36) correspondant à la grandeur prescrite déterminée peut être envoyé à l'au moins un dispositif d'extraction de volume (90) du système de freinage de telle sorte qu'un volume supplémentaire réel, correspondant au volume supplémentaire théorique, de liquide de frein peut être amené d'un volume d'accumulateur (92) du système de freinage dans le deuxième circuit de freinage (52) présent dans le mode de freinage de maître-cylindre à l'aide d'au moins un dispositif d'extraction de volume (90).

2. Dispositif de commande (10) selon la revendication 1, au moins un signal de capteur (18) d'un capteur de course de freinage (66) et/ou d'un capteur de pression de freinage pouvant être reçu et pris en compte pour servir d'au moins une grandeur théorique (s).

3. Dispositif de commande (10) selon la revendication 1 ou 2, au moins un signal émis (20) d'un capteur de pression de freinage (98), d'un capteur de nombre de tours de roue et/ou d'un capteur de vitesse du véhicule pouvant être reçu et pris en compte pour servir d'au moins une grandeur réelle (p1).

4. Dispositif de commande (10) selon l'une quelconque des revendications précédentes, une grandeur par rapport à un rapport d'au moins une différence de volume du deuxième circuit de freinage (52) et/ou d'un compartiment de maître-cylindre de frein (104) relié au deuxième circuit de freinage (52) pouvant être reçue et prise en compte pour servir de grandeur d'élasticité par rapport à l'élasticité du deuxième circuit de freinage (52) et de différence de pression dans le deuxième circuit de freinage (52).

5. Système de freinage pour un véhicule avec :
un maître-cylindre de frein (62) ;
un volume d'accumulateur (92) pouvant être rempli de liquide de frein ;
un premier circuit de freinage (50) doté d'au moins un premier cylindre de freinage de roue (54a) et un deuxième circuit de freinage (52) doté d'au moins un deuxième cylindre de freinage de roue (52b), le deuxième circuit de freinage (52) pouvant être entraîné au moins dans un mode de freinage de maître-cylindre dans lequel une pression (p2) peut être commandée dans le deuxième circuit de freinage (52) à l'aide du maître-cylindre de frein (62) ;
au moins un dispositif d'extraction de volume (90) ; et
un dispositif de commande (10) selon l'une quelconque des revendications précédentes.

6. Système de freinage selon la revendication 5, le deuxième circuit de freinage (52) étant relié au volume d'accumulateur (92) par le biais d'une conduite de réservoir (89) s'étendant parallèlement au maître-cylindre de frein (62) et le volume supplémentaire réel de liquide de frein pouvant être amené du volume d'accumulateur (92) dans le deuxième circuit de freinage (52) présent dans le mode de freinage de maître-cylindre via la conduite de réservoir (89), à l'aide de l'au moins un dispositif d'extraction de volume (90).

7. Système de freinage selon la revendication 5, le volume d'accumulateur (92) étant relié au maître-cylindre de frein (62) via un alésage d'échange doté d'un dispositif d'étanchéité et le volume supplémentaire réel de liquide de frein pouvant être amené du volume d'accumulateur (92) dans le deuxième circuit de freinage (52) présent dans le mode de freinage de maître-cylindre via le dispositif d'étanchéité commandé dans un état au moins en partie ouvert, à l'aide de l'au moins un dispositif d'extraction de volume (90).

8. Système de freinage selon l'une quelconque des revendications 5 à 7, le maître-cylindre de frein (62) comprenant un premier compartiment de pression (102) associé au premier circuit de freinage (50) et un deuxième compartiment de pression (104) associé au deuxième circuit de freinage (52) et un premier volume maximal du premier compartiment de pression (102) étant supérieur à un deuxième volume maximal du deuxième compartiment de pression (104).

9. Procédé d'actionnement d'un système de freinage pour un véhicule, avec un maître-cylindre de frein (62), un volume d'accumulateur (92) pouvant être rempli de liquide de frein, un premier circuit de freinage (50) doté d'au moins un premier cylindre de freinage de roue (54a), un deuxième circuit de freinage (52) doté d'au moins un deuxième cylindre de freinage de roue (54b), le deuxième circuit de freinage (52) pouvant être entraîné au moins dans un mode de freinage de maître-cylindre dans lequel la pression (p2) régnant dans le deuxième circuit de freinage (52) peut être commandée à l'aide du maître-cylindre de frein (62) et au moins un dispositif d'extraction de volume (90), avec les étapes suivantes :
calcul d'au moins une grandeur théorique (s) par rapport à une pression de freinage théorique à régler dans le premier circuit de freinage (50) et/ou dans au moins un premier cylindre de freinage de roue (54a) et calcul d'au moins une grandeur réelle (p1) par rapport à une pression de freinage réelle (p1) présente dans le premier circuit de freinage (50) et/ou dans l'au moins un premier cylindre de freinage de roue (54a) et/ou par rapport à un couple de freinage réel exercé sur l'au moins une roue (56) par l'au moins un premier cylindre de freinage de roue (54a) ; et/ou
calcul d'une grandeur d'élasticité par rapport à une élasticité du deuxième circuit de freinage (52) ;
détermination d'une grandeur prescrite par rapport à un volume supplémentaire théorique de liquide de frein du deuxième circuit de freinage (52) présent dans le mode de freinage de maître-cylindre en tenant compte d'une première grandeur d'écart de l'au moins une grandeur réelle (p1) par rapport à l'au moins une grandeur théorique (s) et/ou d'une deuxième grandeur d'écart de la grandeur d'élasticité par rapport à une grandeur d'élasticité théorique prédéfinie ; et
amenée d'un volume supplémentaire réel de liquide de frein correspondant à la grandeur prescrite, du volume d'accumulateur (92) dans le deuxième circuit de freinage (52) présent dans le mode de freinage de maître-cylindre, à l'aide de l'au moins un dispositif d'extraction de volume (90).

10. Procédé selon la revendication 9, le volume supplémentaire réel de liquide de frein étant amené du volume d'accumulateur (92) dans le deuxième circuit de freinage (52) présent dans le mode de freinage de maître-cylindre via une conduite de réservoir (89) reliant le deuxième circuit de freinage (52) au volume d'accumulateur (92), parallèlement au maître-cylindre de frein (62), à l'aide de l'au moins un dispositif d'extraction de volume (90).

11. Procédé selon la revendication 9, un dispositif d'étanchéité d'un alésage d'échange reliant le volume d'accumulateur (92) au maître-cylindre de frein (62) étant au moins en partie ouvert et le volume supplémentaire réel de liquide de frein étant amené du volume d'accumulateur (92) dans le deuxième circuit de freinage (52) présent dans le mode de freinage de maître-cylindre via le dispositif d'étanchéité au moins en partie ouvert, à l'aide de l'au moins un dispositif d'extraction de volume (90).

12. Procédé selon l'une quelconque des revendications 9 à 11, au moins une course de freinage (s) et/ou une pression de freinage d'un actionnement d'un élément d'actionnement de frein (64) étant déterminées par un conducteur du véhicule comme l'au moins une grandeur théorique (s).

13. Procédé selon l'une quelconque des revendications 9 à 12, au moins une pression (p1) régnant dans le premier circuit de freinage (50) et/ou dans l'au moins un premier cylindre de freinage de roue (54a), une variation dans le temps d'une vitesse de rotation d'une roue (56) et/ou un ralentissement de véhicule déterminés servant d'au moins une grandeur réelle (p1).

14. Procédé selon l'une quelconque des revendications 9 à 13, une grandeur par rapport à un rapport d'au moins une différence de volume du deuxième circuit de freinage (52) et/ou d'un compartiment de pression (104), relié au deuxième circuit de freinage (52), du maître-cylindre de frein (62) et d'une différence de pression régnant dans le deuxième circuit de freinage calculé servant de grandeur d'élasticité par rapport à l'élasticité du deuxième circuit de freinage (52).
